# EUROPEAN PATENT APPLICATION

(11) **EP 4 663 378 A1**
(43) Date of publication of application: **17.12.2025**
(21) Application number: 24807531.9
(22) Date of filing: 14.05.2024
(51) Int. Cl.: B29C 51/08, H01M 50/105, B29C 51/26, B29C 51/34, B29C 51/42, B29C 43/36, B29C 43/02, B29C 43/58, B29C 43/52

(54) **APPARATUS FOR MOLDING POUCH FOR SECONDARY BATTERY AND METHOD FOR MANUFACTURING POUCH-TYPE SECONDARY BATTERY USING SAME**

(30) Priority: 17.05.2023 KR 20230063969
(71) Applicant: LG Energy Solution, Ltd., Seoul 07335 (KR)
(72) Inventor: JUNG, Woo Jung, Daejeon 34122 (KR)
(74) Representative: Goddar, Heinz J.
(86) International application number: PCT/KR2024/006555
(87) International publication number: WO 2024/237660

(57) **Abstract**

The present invention relates to a method for manufacturing a pouch-type secondary battery, and more specifically, relates to a pouch forming device capable of preventing a curling phenomenon, and a secondary battery manufacturing method using the same.

According to one example of the present invention, it may provide a pouch forming device for a secondary battery comprising: a grip module holding and fixing edge portions of the pouch film; a first press module disposed on one side of the pouch film and pressure-forming the pouch film in the other side direction to stretch the pouch film; and a second press module disposed on the other side of the pouch film and press-forming the pouch film in one side direction to form a stepped battery cell accommodating part with respect to the edge portions.

## Description

### Technical Field

The present invention relates to a method for manufacturing a pouch-type secondary battery, and more specifically, relates to a pouch forming device capable of preventing a curling phenomenon, and a secondary battery manufacturing method using the same.

### Background Art

Secondary batteries are batteries capable of repeated use through a discharging process converting chemical energy into electrical energy and a charging process converting electrical energy into chemical energy.

Secondary batteries may include nickel-cadmium (Ni-Cd) batteries, nickel-hydrogen (Ni-MH) batteries, lithium-metal batteries, lithium-ion (Li-Ion) batteries, and lithium-ion polymer batteries (Li-Ion Polymer batteries, hereinafter referred to as "LIPB"), and the like.

Lithium secondary batteries have a cycle life of about 500 cycles or more and a short charging time of about 1 to 2 hours or so, and are lighter to the extent of about 30% to 40% or so compared to nickel-hydrogen batteries, thereby enabling weight saving, and have the highest voltage (30 V to 37 V) unit cell among existing secondary batteries, and excellent energy densities, so that they can have characteristics optimized for mobile devices.

Lithium secondary batteries can be manufactured as pouch-type secondary batteries by encapsulating a battery cell with a pouch which is an aluminum encapsulation material.

In general, unit cells laminated in a three-layer structure of positive electrode/separator/negative electrode, or a five-layer structure of positive electrode/separator/negative electrode/separator/positive electrode or negative electrode/separator/positive electrode/separator/negative electrode are gathered to form one electrode assembly. Then, such an electrode assembly is accommodated in a pouch case that is an encapsulating material. The pouch type accommodates the electrode assembly in a pouch made of a soft polymer material with an irregular shape.

The pouch, which is a case of a pouch-type secondary battery, is manufactured by forming a cup-shaped battery cell accommodating part accommodating an electrode assembly on a pouch film made of a flexible material. That is, when the battery cell accommodating part provided with an accommodating space accommodating the electrode assembly is formed in the pouch film, the electrode assembly is stored in the accommodating space of the battery cell accommodating part, and the edge portion (10b2) is sealed, thereby manufacturing a secondary battery. Such a pouch film is made up of multiple layers, such as an external coating layer, a metal barrier layer, and an internal adhesive layer.

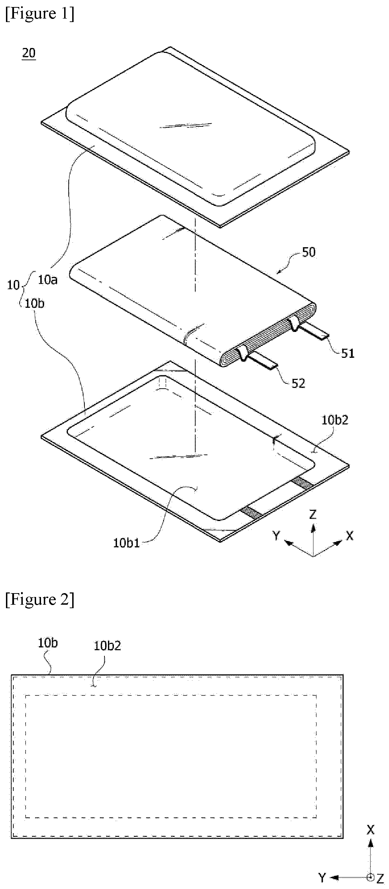

For example, as shown in Figure 1, the electrode assembly (50) is accommodated in the battery cell accommodating part (10b1) formed in the lower pouch film (10b). At this time, the electrode assembly (50) has leads (51, 52), where the leads may be divided into a positive electrode lead (51) and a negative electrode lead (52). By sealing the edge portion (10b2) of each of the upper pouch film (10a) and the lower pouch film (10b) in a state where such an electrode assembly (50) is accommodated in the battery cell accommodating part (10b1), the pouch-type secondary battery (20) may be manufactured.

Recently, a method for manufacturing a pouch-type secondary battery by forming two battery cell accommodating parts in one pouch film, accommodating the electrode assembly in any one of the battery cell accommodating parts to fold the pouch film, and then sealing the pouch film has been widely used. That is, the upper pouch film and the lower pouch film may be connected without separation, and thus manufactured in a folded form.

Figure 2 shows a plan view of a pouch film before formation. The battery cell accommodating part (10b1) is formed in the central portion of the lower pouch film (10b) using a drawing forming method. Thereafter, the pouch (10) was manufactured by accommodating the electrode assembly (50) in the battery cell accommodating part (10b1) and sealing the edge portion (10b2) of each of the upper pouch film (10a) and the lower pouch film (10b).

The drawing forming method was performed through a process of fixing the pouch films (10a, 10b) to a fixing member (11) and stretching the fixed pouch films (10a, 10b) with a punch member (12).

Korean Laid-Open Patent Publication No. 10-2022-0053414 (hereinafter, referred to as the "prior patent") discloses a battery case forming device and a battery case manufacturing method by pressurizing a laminate sheet of a pouch to form a battery case. Particularly, to prevent the laminate sheet from being excessively stretched locally, a technology for expanding the stretching section of the laminate sheet is disclosed.

However, according to the prior patent, when the battery cell accommodating part is formed by pressurizing the pouch film from the top to the bottom during the drawing forming process of the laminate sheet, the pressing force added to the pouch film is easily focused on to a specific portion, for example, a cup-shaped corner portion, whereby it is not recognized that there is a problem in which excessive stretching easily occurs at the edge portion (corner portion) of the battery cell accommodating part.

That is, the edge portion (corner) of the battery cell accommodating part in the conventional art is a portion where structural bending occurs upon shape processing, thereby resulting severe shape deformation, which may be vulnerable as a stretch rate difference between the outer and inner surfaces occurs obviously.

Accordingly, the prior patent does not solve problems such as deteriorating the appearance of the pouch secondary battery due to excessive stretching of the edge portion or shortening the lifespan of the pouch by occurrence of weak portions due to the edge portion with a thin thickness.

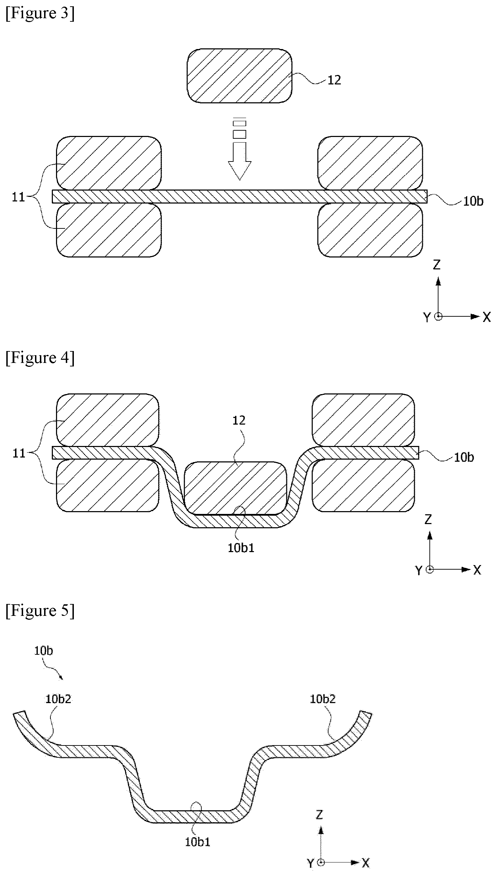

Moreover, in the drawing forming process of the conventional art, as in Figures 3 and 4, when the punch member (12) on the lower pouch film (10b) pressurizes the pouch film (10b) in a direction from the top to the bottom to form a battery cell accommodating part, differences in stretch rate of the layers forming the pouch film may occur.

Upon shape processing of the battery cell accommodating part in the pouch film, the stretch rate difference accumulated between the upper and lower surfaces of the pouch from the center of the pouch film to the edge portion may exhibit obviously at the edges. For example, when a downwardly protruding battery cell accommodating part is formed in the pouch film, a curling phenomenon may occur at the edge portions because the stretch rate difference between the lower surface of the pouch film and the upper surface of the pouch film further accumulates at the edge portions. As a result, as in Figure 5, in the conventional art, the curling phenomenon occurred, in which the edge portions (10b2) of the pouch film (10b) were bent roundly.

In subsequent processes, such a curling phenomenon caused difficulties in a transfer process of the pouch film, a sealing process of the edge of the pouch film, or a bending process, or defects in which the edge portions of the pouch film were folded occurred easily, and became a factor in increasing the incidence of defects because the edge portions were folded and sealed.

Therefore, there is a need to propose a pouch forming device and a pouch-type secondary battery manufacturing method which can prevent excessive stretching from occurring at the edge portions of the battery cell accommodating part in the pouch film of the conventional art, and reduce the curling phenomenon at the edge portions.

### Disclosure

### Technical Problem

The present invention is intended to solve problems with the conventional manufacturing device and manufacturing method of pouch-type secondary batteries.

Through one example of the present invention, it is intended to provide a pouch forming device capable of minimizing a curling phenomenon in which edge portions of a pouch film are bent roundly, and preventing excessive stretching of edge portions of a battery cell accommodating part, and a pouch-type secondary battery manufacturing method using the same.

Through one example of the present invention, it is intended to provide a pouch forming device capable of primarily pressurizing a region of a pouch film where a battery cell accommodating part is formed by a first press block having an ellipsoid shape without a large surface pressure deviation, and a pouch-type secondary battery manufacturing method using the same.

### Technical Solution

In order to achieve the above-described objects, according to one example of the present invention, it may provide a pouch forming device for secondary batteries comprising: a grip module holding and fixing edge portions of the pouch film; a first press module disposed on one side of the pouch film and pressure-forming the pouch film in the other side direction to stretch the pouch film; and a second press module disposed on the other side of the pouch film and press-forming the pouch film in one side direction to form a stepped battery cell accommodating part with respect to the edge portions.

The pouch film may be a unit pouch, and may be a pouch fabric. The pouch fabric may be supplied to the forming device in 1 pitch, that is, a unit pouch length, and then formed. Afterwards, the pouch fabric may be cut into unit pouches. Of course, it may also be supplied to the forming device in a state cut into the unit pouch, and then formed.

The edge portion of the pouch film means the peripheral border portion of the battery cell accommodating part, and the portion surrounded by the edge portion may be pressure-for med to be depressed.

It is preferable that for preventing a curling phenomenon in which the edge portion of the pouch film is bent roundly and reducing a stretch rate of the edge portion of the battery cell accommodating part, the pressure forming of the second press module is performed after the pressure forming of the first press module.

When the battery cell accommodating part is formed after pressure-forming the pouch film using only the second press module, the curling phenomenon may occur due to the stretch rate difference between the upper and lower surfaces of the pouch film after the pressure forming is completed. For example, because the stretch rate of the lower surface is greater than the stretch rate of the upper surface, additional deformation for compensating the stretch rate difference after the pressure forming, that is, the curling phenomenon easily occurs.

Therefore, by performing the pressure forming by the first press module in reverse before the pressure forming by the second press module, the stretch rate difference between the upper and lower surfaces of the pouch film may be reduced. As one example, through the pressure forming using the first press module, the stretch rate of the upper surface of the pouch film may be made greater than the stretch rate of the lower surface. Thereafter, the difference between the stretch rate of the lower surface and the stretch rate of the upper surface may be reduced through the pressure forming in the opposite direction by the second press module.

It is preferable that the grip module comprises a film die formed with a die opening opened in the vertical direction and pressure-supporting the lower surface of the pouch film upon the pressure forming of the pouch film; and a stripper formed with a stripper opening corresponding to the die opening and pressure-supporting the upper surface of the pouch film upon the pressure forming of the pouch film.

It is preferable that the die opening and the stripper opening are formed to correspond to the shape of the battery cell accommodating part.

The first press module may comprise a first press block sequentially inserted into the die opening and the stripper opening along a first axis direction perpendicular to the pouch film, and the second press module may comprise a second press block sequentially inserted into the stripper opening and the die opening along a first axis direction perpendicular to the pouch film.

The first press block and the second press block may be referred to as punches.

It is preferable that the second press block has a shape corresponding to the battery cell accommodating part.

It is preferable that the first press block has a relatively smaller size than that of the second press block. It is preferable that a pressurized area and a punched depth through the first press block are smaller than a pressurized area and a punched depth through the second press block. That is, by making the primary deformation amount smaller than the secondary deformation amount, the tension applied to the pouch film may be gradually increased to stably form the final battery cell accommodating part.

The first press block may have an ellipsoid shape, and the second press block may have a shape corresponding to the battery cell accommodating part.

The first press module may comprise a first press platform on which a first mounting groove where the first press block is accommodated is formed, and the first press block may be provided to move up and down with respect to the first press platform.

The first press platform and the first press block may be provided to move up and down integrally, or the first press block may be provided to move up and down relatively with respect to the first press platform.

The second press module may comprise a second press platform on which a second mounting groove where the second press block is accommodated is formed, and the second press block may be provided to move up and down with respect to the second press platform. The second press platform may be fixed, and the second press block may be provided to move up and down relatively with respect to the second press platform.

When the second press block pressure-forms the pouch film, the first press block and the first press platform may support one side of the second press block to form a repulsive force against the pressing force of the second press block. That is, the first press platform may perform a stopper function.

To achieve the above-described objects, according to one example of the present invention, a pouch-type secondary battery manufacturing method using a pouch forming device including a grip module, a first press module, and a second press module may be provided, in which the pouch-type secondary battery manufacturing method comprises: a grip step in which the grip module holds and fixes edge portions of a pouch film; a first primary press step in which the first press module disposed on one side of the pouch film primarily presses the pouch film in the other side direction to stretch the pouch film; and a secondary press step in which the second press module disposed on the other side of the pouch film secondarily presses the pouch film in one side direction to form a stepped battery cell accommodating part with respect to the edge portions.

It is preferable that for preventing a curling phenomenon in which the edge portion of the pouch film is bent roundly and reducing a stretch rate of the edge portion of the battery cell accommodating part, the secondary press step is performed after completion of the primary press step.

The grip module may comprise a film die formed with a die opening and a stripper formed with a stripper opening corresponding to the die opening.

The grip step may be a step of lifting the film die to pressure-fix the pouch film between the film die and the stripper.

The film die may be provided to move up together with the first press module. That is, the grip step in which the pouch film is fixed using the pressing force of the first press module may be performed.

The first press module may comprise a first press platform and a first press block, and in the primary press step, the first press block may relatively move up and down with respect to the first press platform. That is, the first press block may move up to perform the primary press, and then the first press block may move down to be returned to its original position, thereby completing the primary press.

It is preferable that in the primary press step, the first press block is sequentially inserted into the die opening and the stripper opening.

It is preferable that the secondary press step is performed after the first press block is returned to its original position. Of course, it is preferable that the grip step of the pouch film is still maintained even after the primary press step is completed. It is preferable that this grip step is maintained until the completion of the secondary press step.

It is preferable that the second press module comprises a second press platform and a second press block.

In the secondary press step, the second press block is sequentially inserted into the stripper opening and the die opening.

It is preferable that the second press block has a shape corresponding to the battery cell accommodating part, and has a relatively larger size than that of the first press block. As one example, it is preferable that the pressurized depth and pressurized area in the secondary press step are larger than those in the primary press step.

In the secondary press step, the second press block may move up and down relatively with respect to the second press platform. Alternatively, in the secondary press step, both the first press module and the grip module move up, whereby the second press block moves relatively down, so that the secondary press step may be performed.

### Advantageous Effects

Through one example of the present invention, it is possible to provide a pouch forming device capable of minimizing a curling phenomenon in which edge portions of a pouch film are bent roundly, and preventing excessive stretching of edge portions of a battery cell accommodating part, and a pouch-type secondary battery manufacturing method using the same.

Through one example of the present invention, the first press block having an ellipsoid shape can pressurize the pouch film without a large surface pressure deviation, whereby it is possible to provide a pouch forming device capable of preventing excessive stretching of the edge (corner) portion of the battery cell accommodating part, and a pouch-type secondary battery manufacturing method using the same.

Through one example of the present invention, the stretch rate difference between the inner and outer surfaces of the pouch film is reduced, whereby it is possible to effectively prevent the curling phenomenon of the pouch film on the outer shell of the battery cell accommodating part.

Through one example of the present invention, the stretch rate difference between the inner and outer surfaces of the pouch film is reduced, whereby the effective forming of the battery cell accommodating part can be achieved. Particularly, it is possible to effectively reduce a restoration rate at the edge portions of the battery cell accommodating part.

### Description of Drawings

Figure 1 is a perspective diagram of a pouch-type secondary battery of the conventional art;
Figure 2 is a plan view of a pouch film before molding of a pouch-type secondary battery of the conventional art;
Figures 3 and 4 are vertical cross-sectional diagrams showing the forming process of the pouch forming device of the conventional art;
Figure 5 is a vertical cross-sectional diagram of a pouch film formed using the pouch forming device of the conventional art;
Figure 6 is an exploded perspective diagram of some components of a pouch forming device according to one example of the present invention;
Figures 7 to 10 are vertical cross-sectional diagrams of a pouch forming device according to one example of the present invention;
Figure 11 is a vertical cross-sectional diagram of a pouch forming device according to another example of the present invention;
Figure 12 is a conceptual diagram of a pouch forming device according to one example of the present invention;
Figure 13 is a vertical cross-sectional diagram of a pouch film formed using a pouch forming device according to one example of the present invention;
Figure 14 is an exploded perspective diagram of some components of a pouch forming device according to another example of the present invention;
Figure 15 is a cross-sectional diagram of a pouch forming device according to another example of the present invention; and
Figure 16 is a flowchart of a pouch-type secondary battery manufacturing method according to one example of the present invention.

### Best Mode

Hereinafter, a pouch forming device according to one example of the present invention will be described in detail with reference to the attached drawings.

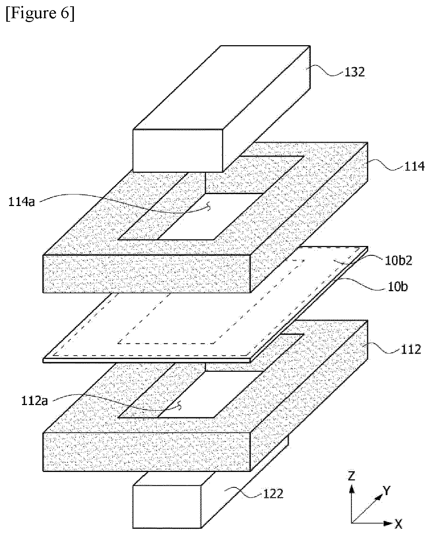

First, the pouch forming device (100) will be explained with reference to Figures 6 to 13. Specifically, the pouch forming device (100) according to one example of the present invention is provided to form the pouch film (10b) of a pouch-type secondary battery. To this end, the pouch forming device (100) of the present invention comprises a grip module, a first press module (120), and a second press module (130).

The grip module is provided so that edge portions (10b2) of a pouch film (10b) are hold and fixed. When the pouch film (10b) is rectangular on a plane surface, the grip module may be provided to fix the pouch film (10b) by holding the edge portions (10b2) of the rectangular pouch film (10b). That is, the grip module may fix the edge portions (10b2) of the pouch film (10b).

The grip module may comprise a film die (112) supporting the lower surface of the pouch film (10b) and a stripper (114) supporting the upper surface. After the pouch film (10b) is positioned between the film die (112) and the stripper (114), the film die (112) moves up, whereby the pouch film (10b) may be pressurized and fixed between the film die (112) and the stripper (114).

The first press module (120) may be disposed on one side of the pouch film (10b). For example, the first press module (120) may be disposed on the lower side of the pouch film (10b). Also, the first press module (120) may be provided to stretch the pouch film (10b). The first press module (120) may be provided to pressure-form the pouch film (10b) in the other side direction. That is, the first press module (120) may pressurize the pouch film (10b) in the other side direction until it is stretched at a predetermined stretch rate.

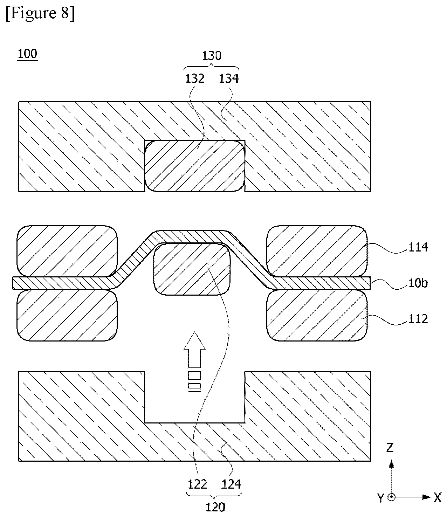

For example, as in Figure 8, when the first press module (120) is disposed on the lower side of the pouch film (10b), the first press module (120) may be provided to pressure-form the pouch film (10b) in the upward direction (Z-axis direction). The portion where the battery cell accommodating part (10b1) of the pouch film (10b) is formed by the first press module (120) may be deformed to protrude upward.

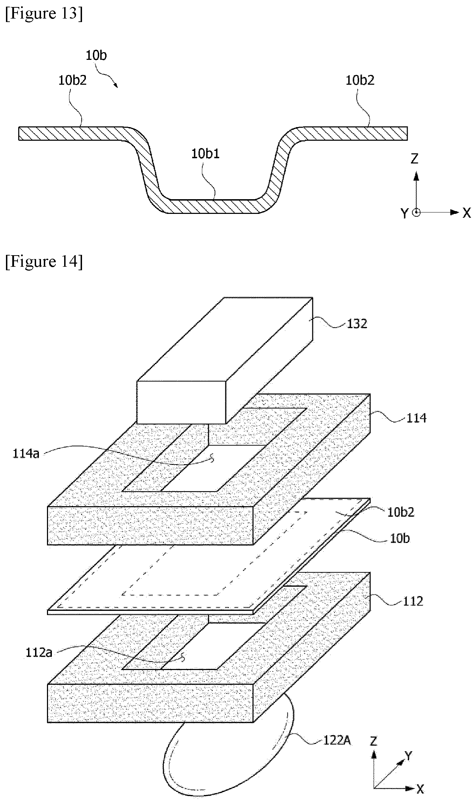

The second press module (130) may be disposed on the other side of the pouch film (10b). For example, the second press module (130) may be disposed on the upper side of the pouch film (10b). Also, the second press module (130) may be provided so that the pouch film (10b) is pressure-formed in one side direction to form a stepped battery cell accommodating part (10b1) with respect to the edge portion (10b2). That is, since the second press module (130) pressurizes the pouch film (10b) in a direction opposite to the press direction of the first press module (120), it is possible to effectively reduce the stretch rate difference of the layers composed of the pouch film (10b). Therefore, as in Figure 13, the edge portion (10b2) of the pouch film (10b) on which the battery cell accommodating part (10b1) is formed by the pouch forming device (100) of the present invention exhibits no curling phenomenon and maintains a flat shape.

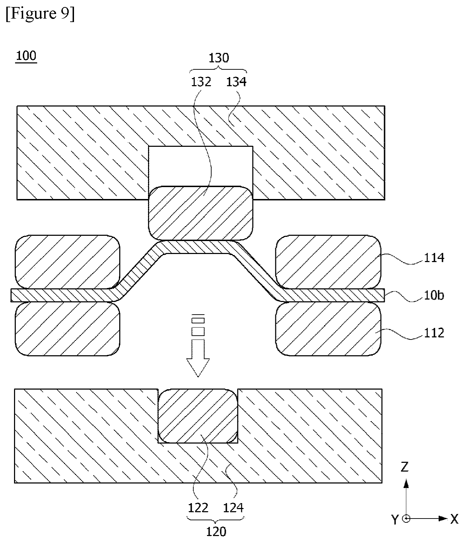

For example, as in Figure 9, the second press module (130) may be provided to pressure-form the portion of the pouch film (10b) deformed to protrude upward in the downward direction. In this case, the portion of the pouch film (10b) where the battery cell accommodating part (10b1) is formed may be stretched downward. That is, as the second press module (130) performs secondary pressure forming of the pouch film (10b), the battery cell accommodating part (10b1) may be formed in the remaining portion of the pouch film (10b) except for the edge portion (10b2).

The second press module (130) may have various shapes depending on the shape of the battery cell accommodating part (10b1) of the pouch in which the electrode assembly (not shown) is accommodated. As one example, the internal space of the battery cell accommodating part (10b1) in the pouch may have a flat hexahedral shape. However, the battery cell accommodating part (10b1) is not necessarily limited to this shape, but may have various shapes.

Through one example of the present invention, the pouch film (10b) is primarily pressure-formed by the first press module (120) so that the stretch rate of the upper surface is greater than that of the lower surface, and then the secondary pressure forming in which the pouch film (10b) is pressed in the opposite direction by the second press module (130) is performed, so that even if the lower surface is stretched, because the upper surface of the pouch film (10b) is already stretched, the stretch rate difference between the upper surface and the lower surface ultimately becomes small.

Therefore, the pouch forming device (100) of the present invention can minimize the curling phenomenon in which the edge portion (10b2) of the pouch film (10b) is bent roundly by forming the battery cell accommodating part (10b1) of the pouch using the first press module (120) and the second press module (130) that press in opposite directions to each other, and as the first press module (120) and the second press module (130) stretch separately the pouch film (10b) in two steps to form the battery cell accommodating part (10b1), it is possible to prevent excessive stretching of the edge (corner) portions of the battery cell accommodating part (10b1). Here, the edge (corner) portion may be, for example, edge portions connected from the side walls of the battery cell accommodating part (10b1) to the bottom, and edge portions connecting one side wall and the other side wall.

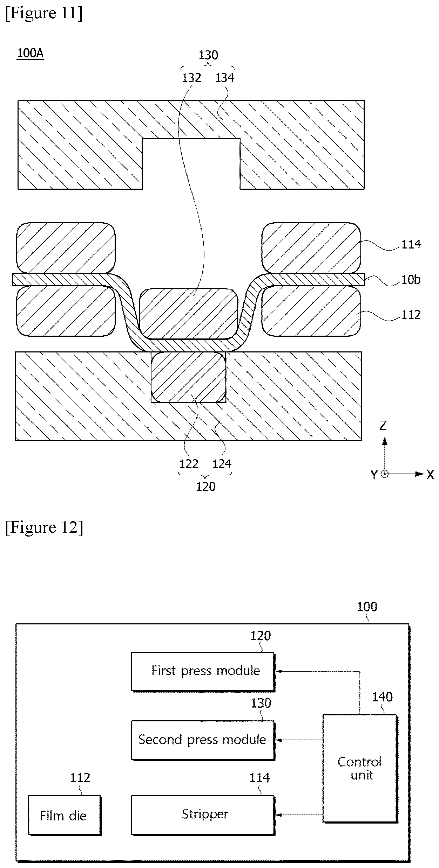

Referring to Figure 12, the pouch forming device (100) of the present invention may further comprise a control unit (140). For preventing the curling phenomenon in which the edge portion (10b2) of the pouch film (10b) is bent roundly, and reducing the stretch rate of the edge portion of the battery cell accommodating part (10b1), the control unit (140) may control the first press module (120) and the second press module (130).

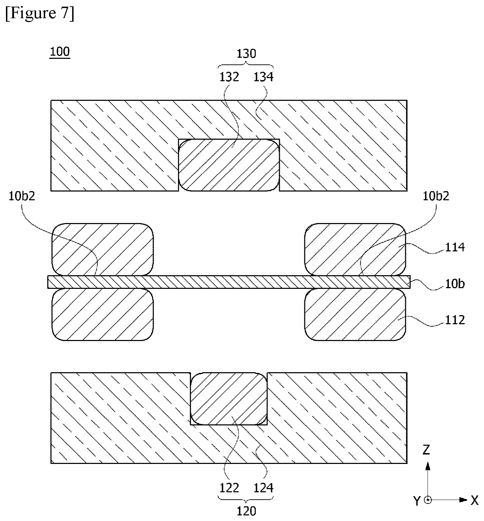

For example, as in Figures 7 to 10, the control unit (140) may control the first press module (120) and the second press module (130) so that the first press module (120) performs the pressure forming in the upward direction, and then the second press module (130) performs the pressure forming in the downward direction.

More specifically, the first press module (120) may be provided with a first press block (122) provided to be movable up and down along a first axis direction perpendicular to the pouch film (10b), and a first press platform (124) on which a first mounting groove where the first press block (122) is accommodated is formed. Here, the first axis direction may mean a vertical direction (Z-axis direction) based on the ground. For example, the first press block (122) may be provided so that it is accommodated in the first mounting groove of the first press platform (124), and then is movable in the upper direction of the first axial direction to press the pouch film (10b). Although not shown in Figures 7 to 10, the pouch forming device (100) of the present invention may be provided with moving members provided to move the first press block (122) and the second press block (132). The first press block (122) and the second press block (132) move at constant pressure and speed to apply pressure to one surface or the other surface of the pouch film (10b) seated on the film die (112), whereby they may stretch the pouch film (10b).

The second press module (130) may be provided with a second press block (132) provided to be movable up and down along the first axis direction perpendicular to the pouch film (10b), and a second press platform (134) on which a second mounting groove where the second press block (132) is accommodated is formed. For example, the second press block (132) may be provided so that it is accommodated in the second mounting groove of the second press platform (134), and then is movable in the lower direction (the negative (-) direction of the Z axis) of the first axial direction to press the pouch film (10b).

Also, the second press block (132) may have a shape corresponding to the inner space of the battery cell accommodating part (10b1) of the pouch film (10b). The second press block (132) may have a relatively larger size than that of the first press block (122). Since the battery cell accommodating part (10b1) is formed on the pouch film (10b) using the second press block (132), it is preferable that the portion where the battery cell accommodating part (10b1) is formed has the degree stretched by the second press block (132) greater than the degree stretched by the first press block (122). Conversely, if the second press block (132) has a smaller size than that of the first press block (122), it is not preferable because stretching sufficient to form the battery cell accommodating part (10b1) in the pouch film (10b) may not occur.

Therefore, in the first press module (120) and the second press module (130) of the present invention, the first press block (122) and the second press block (132) separately stretch the pouch film (10b) in two steps, and the second press block (132), which has a relatively larger size than that of the first press block (122), forms the battery cell accommodating part (10b1), so that compared therewith as in Figure 13, it is possible to form the battery cell accommodating part (10b1) in an intact shape without excessive stretching of the edge (corner) portions of the battery cell accommodating part (10b1).

Figure 14 is an exploded perspective diagram of a pouch forming device according to another example of the present invention.

Referring to Figure 14, the first press block (122A) of the pouch forming device (100) according to another example of the present invention may have a shape and a size different from those of the second press block (132). For example, the first press block (122A) may have a sphere or ellipsoid shape. Unlike the first press block (122) of the rectangular parallelepiped in Figure 6, the first press block (122A) has a curved surface, so that it is possible to pressurize the portion where the battery cell accommodating part (10b1) of the pouch film (10b) is formed without a large surface pressure deviation.

On the other hand, the second press block (132) may have a shape corresponding to the battery cell accommodating part (10b1). For example, when the internal space of the battery cell accommodating part (10b1) has a hexahedral shape, the second press block (132) may have a hexahedral shape with a size corresponding thereto.

Therefore, the pouch forming device (100) according to another example of the present invention comprises a first press block (122A) having a spherical or ellipsoid shape and a second press block (132) having a shape corresponding to the inner space of the battery cell accommodating part (10b1), so that it is possible to pressure-form the portion where the battery cell accommodating part (10b1) of the pouch film (10b) is primarily formed by the first press block (122A) having a spherical or ellipsoid shape without a large surface pressure deviation, whereby even stretching may occur in the portion where the battery cell accommodating part (10b1) of the pouch film (10b) is formed. Accordingly, it is possible to effectively prevent excessive stretching of the edge (corner) portion of the battery cell accommodating part (10b1) during a process of performing the secondary pressure forming by the second press block (132).

Referring again to Figures 7 to 13, the grip module of the pouch forming device (100) according to one example of the present invention may comprise a film die (112) and a stripper (114). Specifically, the film die (112) may have a die opening (112a) opened in the first axial direction in a block body. The die opening (112a) may have a size that the first press block (122) can pass therethrough. The first press block (122) is inserted into the die opening (112a) in the upper direction of the first axial direction (Z-axis direction in Figure 6), which may be provided to pressurize the pouch film (10b). The first press block (122) may pass through the die opening (112a). For example, the film die (112) may be provided to be movable up and down along the first axial direction by a moving member (not shown) such as a pneumatic cylinder. For example, the pneumatic cylinder may be provided with a so-called hydraulic system that operates through pressure generated when a fluid, such as gas or liquid, flows therein. Therefore, the first press block (122) may pressurize the pouch film (10b) while passing through the die opening (112a), thereby enabling a precise stretching process.

Also, the stripper (114) may have a stripper opening (114a) opened vertically in the block body. The stripper opening (114a) may have a size that the second press block (132) can pass therethrough. The stripper (114) may be installed to be movable up and down along the first axial direction. For example, the stripper (114) may be provided to be movable up and down along the first axial direction by a moving member (not shown) such as a pneumatic cylinder. A portion of the stripper (114) may be connected to the pneumatic cylinder. The stripper (114) may be provided to pressurize one surface (upper surface) of the film die (112) by the moving member in a state where the pouch film (10b) is positioned on the film die (112).

The second press block (132) is inserted into the stripper opening (114a) in the lower direction of the first axis direction (Z-axis direction in Figure 6), which may be provided to pressurize the pouch film (10b). The second press block (132) may pass through the stripper opening (114a). That is, the second press block (132) may pressurize the pouch film (10b) while passing through the stripper opening (114a), thereby enabling a precise stretching process.

Therefore, the pouch forming device (100) of the present invention may stably fix the edge portion (10b2) of the pouch film (10b) by comprising the film die (112) and the stripper (114), thereby performing the stretching process of the pouch film (10b) using the first press module (120) and the second press module (130) while accurately controlling the stretch rate.

Referring to Figure 11, in the pouch forming device (100A) according to another example of the present invention, when the second press block (132) pressure-forms the pouch film (10b), the first press block (122) and the first press platform (124) may be provided to block the lower surface of the second press block (132) for creating a repulsive force against the downward force of the second press block (132).

That is, the first press block (122) and the first press platform (124) may perform a press die function for the second press block (132) when the second press block (132) pressure-forms the pouch film (10b). Here, the 'press die function' means a function of applying a repulsive force against the downward force of the second press block (132) to the lower surface of the second press block (132) to form the shape of the battery cell accommodating part (10b1).

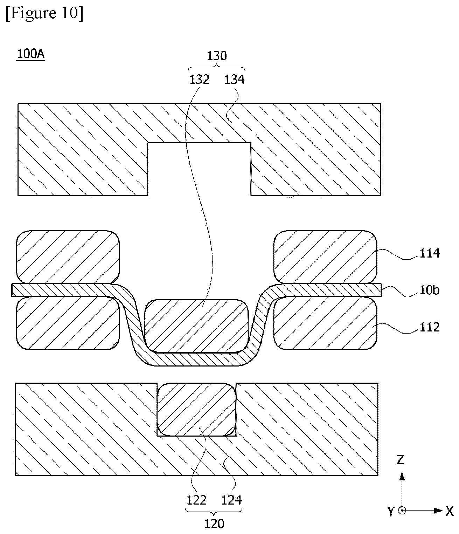

At this time, the first press block (122) and the first press platform (124) may be positioned at a higher position, compared to the first press block (122) and the first press platform (124) of Figure 10, to be capable of blocking the lower surface of the second press block for performing the press die function.

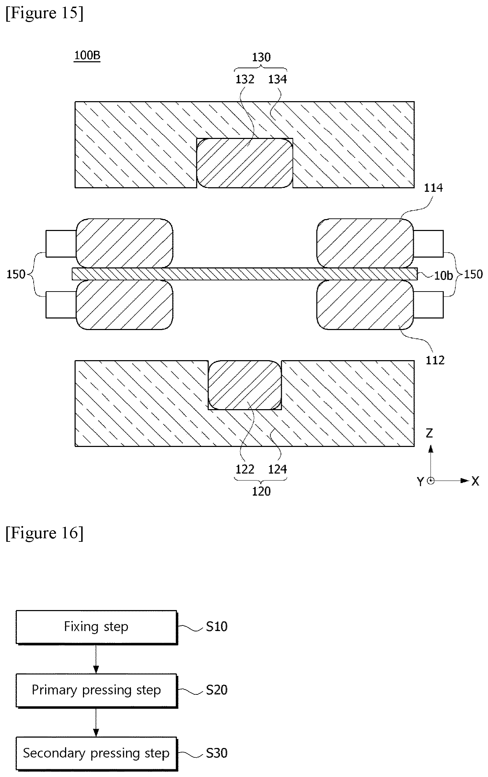

Referring to Figure 15, the pouch forming device (100B) according to another example of the present invention may further comprise a cooling member (150). The cooling member (150) may be provided to cool at least one of the film die (112) and the stripper (114). For example, as in Figure 15, the pouch forming device (100B) according to another example of the present invention may further comprise two cooling members (150) configured to cool each of the film die (112) and the stripper (114). For example, the cooling members (150) may be in contact with the film die (112) and the stripper (114) to cool the film die (112) and the stripper (114) through a heat conduction method. For example, the cooling member (150) may discharge heat generated in the film die (112) and the stripper (114) to the outside using a refrigerant. For example, the refrigerant may be cooling water. The refrigerant may be configured to be movable inside the cooling member (150). Alternatively, the cooling member (150) may comprise a metal material with an excellent thermal conductivity. For example, the cooling member (150) may comprise an aluminum or copper material.

Therefore, the pouch forming device (100B) according to another example of the present invention may cool at least one of the film die (112) and the stripper (114) by further comprising a cooling member (150), thereby cooling frictional heat generated during the stretching process, and reducing the stretch rate at the edge portion (10b2) of the pouch film (10b) fixed by the film die (112) and the stripper (114), so that it is possible to minimize unnecessary deformation of the edge portion (10b2) of the pouch film (10b), such as the curling phenomenon.

Hereinafter, a pouch-type secondary battery manufacturing method using the pouch forming device (100) will be described with reference to Figure 16 together with Figures 7 to 13.

The pouch-type secondary battery manufacturing method according to one example of the present invention is a method for manufacturing a pouch-type secondary battery using a pouch forming device (100) including a grip module, a first press module (120), and a second press module (130).

Specifically, the pouch-type secondary battery manufacturing method of the present invention may comprise a fixing step (S10), a primary pressing step (S20), and a secondary pressing step (S30), as in Figure 16.

Sufficient pressing force is required when ultimately forming the battery cell accommodating part in the pouch film. This pressing force is determined considering not only the pressing force for forming the battery cell accommodating part, but also the pressing force for fixing the pouch film when forming the battery cell accommodating part. This is because if the pouch film is not fixed with sufficient pressing force, wrinkles may occur at the edges of the pouch film.

Therefore, the pouch forming may be performed by basically using the pressing force of the first press module with respect to the second press module (130).

Specifically, in the fixing step (S10), the grip module grabs and fixes the edge portion (10b2) of the pouch film (10b). That is, the grip module fixes the edge portion (10b2) of the pouch film (10b), so that the primary press step and the secondary press step may be stably performed later.

In the pouch fixing step (S10), the first press module may generate the pressing force while it moves up. At this time, the film die also moves up together, where the pressing force may be transmitted to the stripper. Therefore, the pouch film may be pressurized and fixed between the film die and the stripper through the upward pressing force of the first press module.

In the primary pressing step (S20), the first press module (120) disposed on one side of the pouch film (10b) primarily presses the pouch film (10b) in the other side direction to stretch the pouch film (10b). For example, as in Figure 8, the first press module (120) may be provided to pressure-form the pouch film (10b) in the upward direction (positive (+) direction of the Z axis). The portion where the battery cell accommodating part (10b1) of the pouch film (10b) is formed by the first press module (120) may be deformed to be protruded in the upper direction.

Specifically, the pouch film (10b) may be pressure-molded while the first press block (122) of the first press module (120) moves up. That is, only the first press block (122) moves up from the position where the pouch film is fixed and is sequentially inserted into the opening of the film die and the opening of the stripper, whereby the primary pressing step may be performed. Then, the primary pressing step may be completed by returning the first press block (122) to its original position. At this time, it can be regarded that the pouch film is still in a state of being fixed.

In the secondary pressing step (S30), the second press module (130) disposed on the other side of the pouch film (10b) secondarily presses the pouch film (10b) in one side direction to form a stepped battery cell accommodating part (10b1) with respect to the edge portion (10b2). For example, as in Figures 9 and 10, the second press module (130) may be provided to pressure-form the pouch film (10b) with the portion convexly deformed in the upward direction toward the downward direction. In this case, the portion of the pouch film (10b) where the battery cell accommodating part (10b1) is formed may be stretched in the downward direction. The second press module (130) may form the pouch film (10b) by secondarily pressing it so that the battery cell accommodating part (10b1) is formed in the remaining portion of the pouch film (10b) except for the edge portion (10b2).

Specifically, after the primary press step is completed, the first press module (120) may provide pressing force thereto while moving up together with the grip module. That is, the first press module (120) and the grip module may move up together in a state where the pouch film is still pressure-fixed in the grip module. At this time, the pressing force may be generated by the upward pressing force of the first press module (120).

In one example, the secondary press step may be performed by raising and lowering the second press block (132) of the second press module (130). In this case, the very large pressing force, that is, the pressing force caused by the elevation of the first press module (120), cannot be used in the secondary press step. According to this example, a drive of the grip module and a drive of the first press module may be performed through one drive However, a drive of the first press block and a drive of the second press block are added, whereby the pouch forming may be performed using a total of three drives.

In another example, as the grip module and the first press module (120) move up in a state where the second press block (132) is relatively fixed, the secondary press step may be performed. That is, as the first press module (120) and the grip module move up, the second press block (132) is sequentially inserted into the opening of the stripper and the opening of the film die, whereby the secondary press step may be performed. In this case, the very large pressing force, that is, the pressing force caused by the elevation of the first press module (120), can be used in the secondary press step. Meanwhile, according to this example, the drive of the grip module and the drive of the first press module may be performed through one drive. However, the drive of the first press block is added, whereby the pouch forming may be performed using a total of two drives.

Therefore, the pouch-type secondary battery manufacturing method of the present invention can minimize a curling phenomenon in which the edge portion (10b2) of the pouch film (10b) is bent roundly by comprising a primary pressing step (S20) and a secondary pressing step (S30), and the first press module (120) and the second press module (130) are divided into two steps to stretch the pouch film (10b), thereby forming the battery cell accommodating part (10b1), whereby it is possible to prevent excessive stretching of the edge (corner) portion of the battery cell accommodating part (10b1).

Particularly, the pressing force required in the primary press step may be smaller than the pressing force required in the secondary press step. That is, the pressurized depth and/or pressurized area may be relatively small in the primary press step. Therefore, for the primary press, it is possible to easily implement a relative up-and-down drive of the first press block (122) with respect to the first press platform (124) in the first press module (120).

In the pouch-type secondary battery manufacturing method of the present invention, the pouch forming device (100) may be implemented through the control unit (140). The control unit (140) may control the primary pressing step (S20) and the secondary pressing step (S30) to be performed sequentially. For example, as in Figure 9, the control unit (140) may control the first press module (120) and the second press module (130) so that the first press module (120) performs the pressure forming in the upward direction, and then the second press module (130) performs the pressure forming in the downward direction. Accordingly, the pouch-type secondary battery manufacturing method of the present invention can prevent the curling phenomenon in which the edge portion (10b2) of the pouch film (10b) is bent roundly, and reduce the stretch rate of the edge portion of the battery cell accommodating part (10b1).

In the pouch-type secondary battery manufacturing method of the present invention, the first press module (120) may be provided with a first press block (122) provided to be movable up and down by a moving member (not shown) along a first axis direction perpendicular to the pouch film (10b). The second press module (130) may be provided with a second press block (132). The second press block (132) may be installed to be movable up and down by a moving member (not shown) along the first axial direction perpendicular to the pouch film (10b). The second press block (132) may have a shape corresponding to the battery cell accommodating part (10b1), and may have a relatively larger size than that of the first press block (122).

Therefore, as the first press block and the second press block (132) are divided into two steps to stretch the pouch film (10b), and the second press block (132) having a relatively larger size than that of the first press block (122) forms the battery cell accommodating part (10b1), the pouch-type secondary battery manufacturing method of the present invention can prevent excessive stretching of the edge (corner) portion of the battery cell accommodating part (10b1) effectively.

Referring to Figure 14, in the pouch-type secondary battery manufacturing method according to another example of the present invention, the first press block (122A) and the second press block (132) may have shapes and sizes different from each other. For example, as in Figure 14, the first press block (122A) may have an ellipsoid shape. That is, the curved surface of the first press block (122A), which has a spherical or ellipsoid shape, can effectively reduce the deviation of the pressing force applied to the pressurizing surface of the pouch film (10b).

The second press block (132) may have a shape corresponding to the battery cell accommodating part (10b1). For example, when the internal space of the battery cell accommodating part (10b1) has a flat hexahedral shape, the second press block (132) may have a hexahedral shape with a size corresponding to the same.

Therefore, the pouch-type secondary battery manufacturing method according to another example of the present invention may comprise a first press block (122A) having a spherical or ellipsoid shape and a second press block (132) having a shape corresponding to the inner space of the battery cell accommodating part (10b1), thereby primarily pressurizing the portion of the pouch film (10b) where the battery cell accommodating part (10b1) is formed by the first press block (122A) having a spherical or ellipsoid shape without a large surface pressure deviation, so that even stretching may occur in the portion of the pouch film (10b) where the battery cell accommodating part (10b1) is formed, and thus it is possible to effectively prevent occurrence of excessive stretching at the edge (corner) portions of the battery cell accommodating part (10b1).

Referring again to Figures 7 to 13, the grip module used in the pouch-type secondary battery manufacturing method according to one example of the present invention may comprise a film die (112) having a die opening (112a) opened vertically, and a stripper (114) having a stripper opening (114a) provided to correspond to the die opening (112a).

In addition, the step (S10) in which the grip module holds and fixes the edge portions (10b2) of the pouch film (10b) may comprise a step of mounting the pouch film (10b) such that the edge portion (10b2) of the pouch film (10b) is positioned on the film die (112).

In the step (S10) in which the grip module holds and fixes the edge portions (10b2) of the pouch film (10b), a step of pressurizing the film die (112) may be performed after the step of mounting the pouch film (10b) in a state where the stripper (114) moves up and down along the first axial direction, and thus the edge portion (10b2) of the pouch film (10b) is interposed therein. For example, the stripper (114) may be provided to be movable up and down along the first axial direction by a moving member (not shown) such as a pneumatic cylinder. A portion of the stripper (114) may be connected to a pneumatic cylinder. The stripper (114) may be provided to pressurize one surface (upper surface) of the film die (112) in a state where the pouch film (10b) is positioned on the film die (112) by a moving member.

Therefore, the pouch-type secondary battery manufacturing method according to one example of the present invention may stably fix the edge portion (10b2) of the pouch film (10b) by comprising the step of mounting the pouch film (10b) and the step in which the stripper (114) pressurizing the film die (112), thereby perform the stretching process of the pouch film (10b) using the first press module (120) and the second press module (130) while precisely controlling the stretch rate.

Referring again to Figures 7 to 13, the primary pressing step (S20) in the pouch-type secondary battery manufacturing method according to one example of the present invention, is that the first press block (122) is inserted into the die opening (112a) in the first axis direction, which may comprise steps of pressurizing the pouch film (10b), and returning the first press block (122) to its original position.

The secondary pressing step (S30) is that the second press block (132) is inserted into the stripper opening (114a) in the first axial direction, which may comprise steps of pressurizing the pouch film (10b), and returning the second press block (132) to its original position.

Therefore, the pouch-type secondary battery manufacturing method according to one example of the present invention can minimize the curling phenomenon in which the edge portion (10b2) of the pouch film (10b) is bent roundly by comprising the primary pressing step (S20) and the secondary pressing step (S30) which perform the presses in opposite directions to each other, and can prevent excessive stretching of the edge (corner) portion of the battery cell accommodating part (10b1) occurring in the case of the pouch formed by only one pressure forming in one direction, as the first press module (120) and the second press module (130) are divided into two steps to stretch the pouch film (10b) in opposite directions to each other, thereby forming the battery cell accommodating part (10b1).

Meanwhile, referring to Figure 15, the pouch-type secondary battery manufacturing method according to another example of the present invention may further comprise a step of cooling at least one of the film die (112) and the stripper (114). Here, the pouch forming device (100B) may further comprise a cooling member (150). The cooling member (150) may be provided to cool at least one of the film die (112) and the stripper (114). For example, as in Figure 15, the pouch forming device (100B) according to another example of the present invention may further comprise two cooling members (150) configured to cool each of the film die (112) and the stripper (114).

Therefore, the pouch forming device (100B) according to another example of the present invention may cool at least one of the film die (112) and the stripper (114) by further comprising a cooling member (150), thereby cooling frictional heat generated during the stretching process, and reducing the stretch rate at the edge portion (10b2) of the pouch film (10b) fixed by the film die (112) and the stripper (114), so that it is possible to minimize unnecessary deformation of the edge portion (10b2) of the pouch film (10b), such as the curling phenomenon.

The preferred examples of the present invention as described above have been disclosed for illustrative purposes, and those skilled in the art having ordinary knowledge of the present invention will be able to make various modifications, changes, and additions within the spirit and scope of the present invention, and such modifications, changes, and additions should be regarded as falling within the scope of the following claims.

### Industrial Applicability

It is described in the Detailed Description of Invention.

## Claims

1. A pouch forming device for a secondary battery for forming a pouch film of a pouch-type secondary battery, wherein the pouch forming device for a secondary battery comprises:
a grip module holding and fixing edge portions of the pouch film;
a first press module disposed on one side of the pouch film and pressure-forming the pouch film in the other side direction to stretch the pouch film; and
a second press module disposed on the other side of the pouch film and press-forming the pouch film in one side direction to form a stepped battery cell accommodating part with respect to the edge portions.

2. The pouch forming device for a secondary battery according to claim 1,
further comprising a control unit controlling operation of the first press module and the second press module so that for preventing a curling phenomenon in which the edge portion of the pouch film is bent roundly and reducing a stretch rate of the edge portion of the battery cell accommodating part, the pressure forming of the second press module is performed after the pressure forming of the first press module.

3. The pouch forming device for a secondary battery according to claim 1, **characterized in that**
the grip module comprises
a film die formed with a die opening opened in a vertical direction and pressure-supporting a lower surface of the pouch film upon the pressure forming of the pouch film; and a stripper formed with a stripper opening corresponding to the die opening and pressure-supporting an upper surface of the pouch film upon the pressure forming of the pouch film.

4. The pouch forming device for a secondary battery according to claim 3, **characterized in that**
the die opening and the stripper opening are formed to correspond to a shape of the battery cell accommodating part.

5. The pouch forming device for a secondary battery according to claim 3, **characterized in that**
the first press module comprises a first press block sequentially inserted into the die opening and the stripper opening along a first axis direction perpendicular to the pouch film, and the second press module comprises a second press block sequentially inserted into the stripper opening and the die opening along the first axis direction perpendicular to the pouch film.

6. The pouch forming device for a secondary battery according to claim 5, **characterized in that**
the second press block has a shape corresponding to the battery cell accommodating part.

7. The pouch forming device for a secondary battery according to claim 5, **characterized in that**
the first press block has a relatively smaller size than that of the second press block.

8. The pouch forming device for a secondary battery according to claim 7, **characterized in that**
the first press block has an ellipsoid shape, and
the second press block has a shape corresponding to the battery cell accommodating part.

9. The pouch forming device for a secondary battery according to claim 5, **characterized in that**
the first press module comprises a first press platform on which a first mounting groove where the first press block is accommodated is formed, and the first press block is provided to move up and down with respect to the first press platform.

10. The pouch forming device for a secondary battery according to claim 9, **characterized in that**
the second press module comprises a second press platform on which a second mounting groove where the second press block is accommodated is formed, and the second press block is provided to move up and down with respect to the second press platform.

11. The pouch forming device for a secondary battery according to claim 8, **characterized in that**
when the second press block pressure-forms the pouch film, the first press block and the first press platform support one side of the second press block to form a repulsive force against the pressing force of the second press block.

12. A pouch-type secondary battery manufacturing method using a pouch forming device including a grip module, a first press module, and a second press module, comprising:
a grip step in which the grip module holds and fixes edge portions of a pouch film;
a primary press step in which the first press module disposed on one side of the pouch film primarily presses the pouch film in the other side direction to stretch the pouch film; and
a secondary press step in which the second press module disposed on the other side of the pouch film secondarily presses the pouch film in one side direction to form a stepped battery cell accommodating part with respect to the edge portions.

13. The pouch-type secondary battery manufacturing method according to claim 12, **characterized in that**
for preventing a curling phenomenon in which the edge portion of the pouch film is bent roundly and reducing a stretch rate of the edge portion of the battery cell accommodating part, the secondary press step is performed after completion of the primary press step.

14. The pouch-type secondary battery manufacturing method according to claim 12, **characterized in that**
the grip module comprises a film die formed with a die opening and a stripper formed with a stripper opening corresponding to the die opening, and
the grip step is a step of lifting the film die to pressure-fix the pouch film between the film die and the stripper.

15. The pouch-type secondary battery manufacturing method according to claim 14, **characterized in that**
the film die is provided to move up together with the first press module.

16. The pouch-type secondary battery manufacturing method according to claim 15, **characterized in that**
the first press module comprises a first press platform and a first press block, and
in the primary press step, the first press block relatively moves up and down with respect to the first press platform.

17. The pouch-type secondary battery manufacturing method according to claim 16, **characterized in that**
in the primary press step, the first press block is sequentially inserted into the die opening and the stripper opening.

18. The pouch-type secondary battery manufacturing method according to claim 17, **characterized in that**
the secondary press step is performed after the first press block is returned to its original position.

19. The pouch-type secondary battery manufacturing method according to claim 18, **characterized in that**
the second press module comprises a second press platform and a second press block, and
in the secondary press step, the second press block is sequentially inserted into the stripper opening and the die opening.

20. The pouch-type secondary battery manufacturing method according to claim 19, **characterized in that**
the second press block has a shape corresponding to the battery cell accommodating part, and has a relatively larger size than that of the first press block.
